# EUROPÄISCHE PATENTSCHRIFT

(11) **EP 0 922 200 B1**
(45) Veröffentlichungstag und Bekanntmachung des Hinweises auf die Patenterteilung: **28.04.2004**
(21) Anmeldenummer: 97918987.5
(22) Anmeldetag: 14.08.1997
(51) Int. Cl.: G01B 21/26

(54) **VERFAHREN ZUR ERFASSUNG DER ACHSGEOMETRIE BEI KRAFTFAHRZEUGEN MIT EINZELRADAUFHÄNGUNGEN**
METHOD OF DETERMINING AXLE GEOMETRY IN MOTOR VEHICLES WITH INDEPENDENT WHEEL SUSPENSION
PROCEDE PERMETTANT DE DETERMINER LA GEOMETRIE D'ESSIEU D'AUTOMOBILES A SUSPENSION DES ROUES INDEPENDANTES

(30) Priorität: 27.08.1996 DE 19634505
(43) Veröffentlichungstag der Anmeldung: 16.06.1999
(73) Patentinhaber: DaimlerChrysler AG, 70567 Stuttgart (DE)
(72) Erfinder: REICHELT, Helmut, D-73770 Denkendorf (DE); SCHWEGLER, Karlheinz, D-70327 Stuttgart (DE); WILLENBRINK, Ludger, D-71686 Remseck (DE)
(86) Internationale Anmeldenummer: PCT/EP1997/004458
(87) Internationale Veröffentlichungsnummer: WO 1998/009135

(56) Entgegenhaltungen:
- FR-A- 2 487 065
- FR-A- 2 695 996

## Beschreibung

Die Erfindung betrifft ein Verfahren zur Erfassung der Achsgeometrie, insbesondere von Vorspur, Sturz und Nachlauf bei Kraftfahrzeugen mit Einzelradaufhängungen.

Zur Sicherstellung der gewünschten Fahreigenschaften, des Geradeauslaufvermögens und um übermäßigen Reifenverschleiß zu verhindern, schreiben die Kraftfahrzeughersteller bestimmte Achseinstellwerte einschließlich der zulässigen Toleranzen für die Fahrzeugachsen ihrer Modelle vor. Beispielsweise läßt sich die Vorspur über die Spurstangen und/oder der Sturz- und Nachlaufwinkel über einen Exzenter einstellen. Bei den übrigen Achseinstellwerten für die Spreizung, den Lenkrollhalbmesser, den Nachlaufversatz und den Spurdifferenzwinkel handelt es sich um nicht einfach zu messende Konstruktionsdaten, die nur gebraucht werden, um ein unfallbeschädigtes oder schon länger eingesetztes Kraftfahrzeug auf seine Verkehrssicherheit überprüfen zu können.

Da die Achseinstellwerte bzw. die Achsgeometrie von der Beladung und der Lastverteilung abhängig sind, wird eine Überprüfung oder Vermessung am unbeladenen, horizontal stehenden Kraftfahrzeug durchgeführt. Für ein in dieser Neutrallage stehendes Kraftfahrzeug sind die Achseinstellwerte vorgegeben.

Sie können nachgemessen oder geprüft werden, um dann ggf. eingestellt oder nachjustiert zu werden.

Hierzu sind u.a. aus den Druckschriften DE 41 34 411 A1, US 5,056,233 und DE 43 43 624 A1 drei Verfahren bekannt. Aus der erstgenannten Druckschrift ist ein Verfahren ersichtlich, bei dem bestimmte Winkelstellungen eines Kraftfahrzeugrades und vertikale Abstände eines Karosserieteils von der Radmitte neben der dazugehörigen Radstellung gemessen werden. Die Meßwerte werden zur Bestimmung einer Abhängigkeit der Radstellung vom so ermittelten Niveau zueinander in Bezug gesetzt. Aus der zweitgenannten Druckschrift ist ein Verfahren bekannt, bei dem mit Hilfe von an den Radfelgen angelegten Sensoren die Neigungen der Räder zueinander ermittelt werden, um daraus Korrekturwerte zu errechnen. In der drittgenannten Druckschrift wird ein Verfahren vorgestellt, das sich u.a. mit der Auswertung von Lenker- und Radneigung befaßt. Auch hier werden an allen Radfelgen Sensoren zur Neigungserfassung angeordnet.

Ferner ist aus der FR-A-2 695 996 ein Radausrichtsystem bekannt, mit dem u.a. der Radsturz, die Lenkachsenneigung, der Nachlauf und die Vorspur gemessen werden. Auch bei diesem System werden an den Rädern oder Lenkern des zu vermessenden Fahrzeugs Neigungsmeßgeräte angelegt. Dazu befindet sich das Fahrzeug entweder in einer der Konstruktionslage vergleichbaren Lage oder ist für einzelne Messungen sogar in genau ausgerichtetem Zustand aufgebockt.

Ein sinnvolles Messen oder Prüfen der Achsgeometrie ist demnach von einem ordnungsgemäßen Ausrichten und Be- oder Entladen abhängig. Befindet sich das Kraftfahrzeug beispielsweise durch unterschiedliches Ein- oder Ausfedern einzelner Räder u.a. wegen einer falschen Beladung außerhalb der Neutrallage, so stimmen die werkseitigen auf die Neutrallage bezogenen Achseinstellwerte auch bei richtig eingestellter Achsgeometrie mit den erfaßten Meßwerten nicht überein. In diesem Fall besteht die Gefahr, daß durch ein Nachstellen eine korrekte Achsgeometrie verstellt oder eine zu korrigierende Einstellung nicht richtig nachgestellt wird.

Der Erfindung liegt das Problem zugrunde, ein Verfahren zu entwickeln, mit dem die Achsgeometrie unabhängig von der Niveaulage des Kraftfahrzeugs mit einfachen Mitteln gemessen und/oder geprüft werden kann. Das protokollierbare Ergebnis der Messung und/oder Prüfung soll geeignet sein, auch ein automatisches Nach- oder Einstellen zu ermöglichen.

Das Problem wird mit den Merkmalen des Hauptanspruchs gelöst. Innerhalb des Verfahrens wird bei bestimmten Lenkern der Radaufhängungen bei mindestens einer beliebigen Kraftfahrzeuglage die Neigung gemessen oder die Neigungsmessungen werden bei bestimmten Lenkern der Radaufhängungen und einer bestimmten Stelle des Kraftfahrzeugaufbaus bei mindestens einer beliebigen Kraftfahrzeuglage durchgeführt. Die erfaßten Meßwerte werden beispielsweise über eine Datenleitung einem Rechner zugeführt und entweder mit fahrzeugtypspezifischen im Rechner der aktuellen Kraftfahrzeuglage angepaßten Sollwerten bzw. Sollwertbereichen verglichen oder im Rechner auf eine neutrale Kraftfahrzeuglage umgerechnet und mit den fahrzeugtypspezifischen auf eine neutrale Kraftfahrzeuglage bezogenen Sollwerten bzw. Sollwertbereichen verglichen. Mit Hilfe der bei dem Vergleichen ermittelten Abweichungen zwischen den Meßwerten und den entsprechenden Sollwerten oder Sollwertbereichen wird ein Meß- oder Prüfprotokoll über die Achsgeometrie und/oder ein maschinell verwertbarer Einstelldatensatz erstellt.

Die Neigungsmessungen erfolgen mit Hilfe einer elektronischen Neigungsmeßeinrichtung. Die Meßeinrichtung besteht aus einem in einem Gehäuse integrierten Sensor, der eine Meßabweichung gegenüber der Horizontalen oder Vertikalen in Winkelgraden angibt. Das Sensorteil hat beispielsweise einen Meßwertbereich von +/- 15° und eine Meßgenauigkeit von 0,01 bis 0,05°.

Als Sensor und/oder Sensorsystem kann für die Neigungsmeßvorrichtung jedes physikalische Prinzip angewandt werden, das den genannten Meßbereich und die vorgegebene Meßgenauigkeit ermöglicht. Es können u.a. magnetoresistive, konduktometrische, piezoelektrische oder optische Sensoren sein.

Der Sensor ist in einem Gehäuse untergebracht, das an seiner Außenkontur verschiedene Adapterflächen und/oder Adapterkonturen aufweist. Eine Vorrichtung zur Anzeige des Meßwertes kann räumlich getrennt vom Sensor in einem separaten Gehäuse untergebracht sein. Je nach Meßprinzip können die Sensoren einschließlich ihrer Gehäuse wenige Kubikzentimeter groß sein, so daß die Anlageflächen bzw. Anlagekonturen an den Meßobjekten nur wenige Quadratmillimeter groß sein müssen. Es ist denkbar, das Gehäuse des Sensors als Pyramidenstumpf, als Kegel, gestuften Bolzen oder dergleichen zu gestalten, das beispielsweise an den Lenkern des Kraftfahrzeugs in dort vorhandene, der Sensorgehäusegestalt entsprechenden Ausnehmungen für die Neigungsmessung zu stecken.

Bei größeren Sensoren oder Sensorsystemen wird man in der Regel nur mit Adapterelementen zur unterschiedlichen Anpassung des Sensorgehäuses an das Meßobjekt auskommen. Die Adapterelemente sind beispielsweise Haken, Bügel, Klammern und dergleichen. Sie sind so gestaltet, daß sie jeweils an mindestens einem Lenker an einer bestimmten Stelle eine eindeutige Auf- oder Anlage für die Neigungsmeßvorrichtung ermöglichen.

Der vom Sensor ermittelte Neigungswinkel wird auf einer Anzeigeeinrichtung optisch oder akustisch dargestellt bzw. ausgegeben. Die Anzeigeeinrichtung ist am Sensorgehäuse oder in dessen Nähe angeordnet, so daß die die Neigungsmeßvorrichtung bedienende Person vor Ort anhand des ausgegebenen Neigungswinkels die Plausibilität der Messung prüfen und die Messung gegebenenfalls wiederholen kann. Im Gehäuse der Anzeigeeinrichtung befinden sich auch die elektronischen Baugruppen zur Umwandlung der Meßsignale in optisch und/oder akustisch darstellbare Meßwerte.

Selbstverständlich kann die Neigungsmeßvorrichtung auch eine Eingabe-, Speicher- und Recheneinheit haben, so daß über Tastendruck die einzelnen fahrzeugtypspezifischen Prüf- oder Meßvorgänge aufgerufen werden können.

Zum Vermessen oder Prüfen der Achsgeometrie wird das Kraftfahrzeug über eine Grube gefahren oder aufgebockt, so daß die radführenden und radtragenden Lenker zugänglich sind. Das Kraftfahrzeug muß vorher weder entladen werden, noch muß ein korrekter Reifendruck herbeigeführt oder auf eine richtige Reifen- und/oder Felgengröße geachtet werden. Auch muß das Kraftfahrzeug nicht über der Grube oder auf der Hebebühne horizontal ausgerichtet sein.

Für die Meßwerterfassung wird an den verschiedenen Lenkern des Kraftfahrzeugs die Neigungsmeßvorrichtung adaptiert, ein Meßwert ermittelt und an einen nachgeschalteten Rechner übermittelt. Hierbei kann mit einer Neigungsmeßvorrichtung ein Lenker nach dem anderen vermessen werden. Mit mehreren Neigungsmeßvorrichtungen kann auch eine Gruppe von Lenkern, beispielsweise die Lenker einer Radaufhängung, oder alle Lenker gleichzeitig vermessen werden. Im letzten Fall adaptiert ein Bediener die Neigungsmeßvorrichtungen an allen für die Achsgeometrievermessung relevanten Lenkern und startet dann zentral die Messung.

Zusätzlich kann der Aufbau des zu vermessenden Kraftfahrzeugs während des Meßvorganges oder zwischen einzelnen Messungen in verschiedene Richtungen geneigt werden, so daß sich die Lage der Räder gegenüber dem Aufbau ändert. Aus den Neigungsänderungen der Lenker bei einem Ein- oder Ausfedern der Räder können u.a. weitere Achsgeometriewerte ermittelt werden bzw. Unregelmäßigkeiten im kinematischen und elastokinematischen Verhalten der Radaufhängung festgestellt werden.

Des weiteren besteht die Möglichkeit die einzelne Lenkerneigung in ihrem Verhältnis zur Aufbauneigung zu messen. U.a. lassen sich hiermit das obere und untere Ende des Federwegs einer einzelnen Radaufhängung ermitteln.

Die erfaßten Meßwerte werden per Datenleitung oder drahtlos, beispielsweise über Funk, einem Rechner zugeführt. Dem Rechner, z.B. ein PC, werden die fahrzeugtypspezifischen Daten des Fahrwerks zur Verfügung gestellt. Anhand der Neigungen der verschiedenen Lenker einer Radaufhängung, den fahrzeugtypspezifischen Daten und den entsprechenden getriebetechnischen Formeln kann beispielsweise das Niveau dieser Radaufhängung errechnet werden. Das Niveau ist hierbei der Ein- oder Ausfederweg gegenüber einer Null- oder Neutrallage des Rades bzw. der Radaufhängung.

Mit Hilfe des Niveaus eines Rades, gegebenenfalls auch einer Achse, lassen sich beispielsweise niveauabhängige Achskennwerte wie Sturz, Nachlauf oder Spurdifferenzwinkel errechnen. Die zur Niveauberechnung notwendigen fahrzeugtypspezifischen Daten oder Formeln können auch durch experimentell ermittelte Daten oder Datensätzen generiert werden.

Die über die Lenkerneigungen errechneten aktuellen Achskennwerte werden im Rechner mit den vom Fahrzeughersteller vorgegebenen Sollwerten oder Sollwertbereichen verglichen. Die Ergebnisse des oder der Vergleiche werden vom Rechner beispielsweise mittels eines Druckers protokolliert. Liegen einer oder mehrere Achskennwerte außerhalb der entsprechenden Sollwertbereiche werden gegebenenfalls mit dem Protokoll maschinell verwertbaren Korrekturhinweise über eine entsprechende Rechnerschnittstelle ausgegeben. Diese Korrekturhinweise bzw. die Ein- oder Nachstellaufforderungen können im Herstellerwerk und/oder den Reparaturwerkstätten mittels geeigneter Vorrichtungen maschinell erfolgen.

## Patentansprüche

1. Verfahren zur Erfassung der Achsgeometrie, insbesondere von Vorspur, Sturz und Nachlauf bei Kraftfahrzeugen mit Einzelradaufhängungen, wobei die meßtechnisch erfaßten Meßwerte über eine Datenleitung oder drahtlos einem Rechner zugeführt werden, **dadurch gekennzeichnet,**
- **daß** bei bestimmten Lenkern der Radaufhängungen unabhängig von der Niveaulage des Kraftfahrzeugs die Neigung gemessen wird oder
- **daß** die Neigungsmessungen bei bestimmten Lenkern der Radaufhängungen und einer bestimmten Stelle des Kraftfahrzeugaufbaus unabhängig von der Niveaulage des Kraftfahrzeugs durchgeführt werden,
- **daß** die Meßwerte mit fahrzeugtypspezifischen im Rechner der aktuellen Kraftfahrzeuglage angepaßten Sollwerten oder Sollwertbereichen verglichen werden oder
- **daß** die Meßwerte im Rechner auf eine neutrale Kraftfahrzeuglage umgerechnet und mit den fahrzeugtypspezifischen auf eine neutrale Kraftfahrzeuglage bezogenen Sollwerten oder Sollwertbereichen verglichen werden und
- **daß** mit Hilfe der bei dem Vergleichen ermittelten Abweichungen zwischen den Meßwerten und den entsprechenden Sollwerten oder Sollwertbereichen ein Meß- oder Prüfprotokoll über die Achsgeometrie und/oder ein maschinell verwertbarer Einstelldatensatz erstellt wird.

2. Verfahren gemäß Anspruch 1, **dadurch gekennzeichnet, daß** pro Rad der Neigungswinkel eines bestimmten Lenkers mit Hilfe einer elektronischen Wasserwaage erfaßt wird.

3. Verfahren gemäß Anspruch 2, **dadurch gekennzeichnet, daß** pro Rad aus dem Neigungswinkel und den fahrzeugtypspezifischen Daten der Radaufhängung das Niveau errechnet wird, um das das Rad gegenüber einer Null- oder Neutrallage versetzt ist.

4. Verfahren gemäß Anspruch 3, **dadurch gekennzeichnet, daß** die Sollwerte und/oder die Sollwertbereiche für bestimmte Achsgeometrien als Funktion der fahrzeugtypspezifischen Daten der Radaufhängungen in Abhängigkeit des pro Rades oder pro Achse errechneten Niveaus ermittelt werden.

5. Verfahren gemäß Anspruch 1, **dadurch gekennzeichnet, daß** die Neigungsmessungen einzeln nacheinander, gruppenweise oder alle annähernd zeitgleich durchgeführt werden.

6. Verfahren gemäß Anspruch 1, **dadurch gekennzeichnet, daß** die fahrzeugtypspezifischen Sollwerte oder Sollwertbereiche der Achsgeometrie getriebetechnisch berechnet oder experimentell ermittelt werden.

## Claims

1. A process for determining axle geometry, particularly of toe-in, camber and caster in motor vehicles with single wheel suspension systems, the values determined by measuring techniques being fed to a computer via a data line or wirelessly,
**characterised in that**
- inclination is measured independently of the level position of the motor vehicle at given suspension links in the wheel suspension systems,
- the inclination measurements are carried out independently of the level position of the motor vehicle at given suspension links in the wheel suspension systems and at a given point in the motor vehicle structure,
- in the computer the measured values are compared with vehicle type-specific reference values or reference ranges adjusted to the motor vehicle position at a given time or
- in the computer the measured values are converted to a neutral motor vehicle position and compared with the vehicle type-specific reference values or reference ranges relating to a neutral vehicle position,
- using the deviations between the measured values and the corresponding reference values or references ranges determined in the comparison a measurement or test protocol for the axle geometry is produced and/or a computer processable adjustment data record is produced.

2. A process in accordance with claim 1,
**characterised in that**
the angle of inclination of a given suspension link is determined for each wheel using an electronic water level.

3. A process in accordance with claim 2,
**characterised in that**
the level by which the wheel is offset in relation to a zero or neutral position is calculated for each wheel from the angle of inclination and the vehicle type-specific data relating to the wheel suspension system.

4. A process in accordance with claim 3,
**characterised in that**
the reference values and/or the reference ranges for given axle geometries are determined dependent on the level calculated for each wheel or axle as a function of the vehicle type-specific data relating to the wheel suspension systems.

5. A process in accordance with claim 1,
**characterised in that**
the inclination measurements are carried out individually one after another, in groups or all approximately at the same time.

6. A process in accordance with claim 1,
**characterised in that**
the vehicle type-specific reference values or reference ranges for the axle geometry are either calculated according the theory of machines and mechanisms or determined by experimentation.

## Revendications

1. Procédé pour la détermination de la géométrie d'un essieu, en particulier le pincement, le carrossage et l'ouverture dans des véhicules automobiles à suspensions de roues indépendantes, les valeurs de mesure détectées par métrologie étant amenées à un calculateur via une ligne de données ou via un trajet sans fil, **caractérisé en ce que**
- pour certains bras des suspensions de roues, on mesure l'inclinaison indépendamment de la situation du niveau du véhicule automobile, ou
- pour certains bras des suspensions de roues et à un emplacement déterminé de la caisse du véhicule automobile, on effectue les mesures d'inclinaison indépendamment de la situation du niveau du véhicule automobile,
- on compare les valeurs de mesure avec des valeurs de consigne ou avec des plages de valeurs de consigne spécifiques au type de véhicule et adaptées dans le calculateur à la position actuelle du véhicule automobile, ou
- les valeurs de mesure sont converties dans le calculateur en un niveau neutre du véhicule automobile et comparées avec les valeurs de consigne ou avec les plages de valeurs de consigne spécifiques au type de véhicule et relatives à un niveau neutre du véhicule automobile, et
- à l'aide des écarts, déterminés lors des comparaisons, entre les valeurs de mesure et les valeurs de consigne ou les plages de valeurs de consigne correspondantes, on établit un procès-verbal de mesure ou de contrôle quant à la géométrie de l'essieu et/ou on établit un groupe de données de réglage exploitable à la machine.

2. Procédé selon la revendication 1, **caractérisé en ce que** pour chaque roue, on détecte l'angle d'inclinaison d'un bras déterminé à l'aide d'un niveau électronique.

3. Procédé selon la revendication 2, **caractérisé en ce que** pour chaque roue, on calcule le niveau à partir de l'angle d'inclinaison et des données, spécifiques au type de véhicule, de la suspension des roues, niveau duquel la roue est décalée par rapport à une position nulle ou neutre.

4. Procédé selon la revendication 3, **caractérisé en ce que** l'on détermine les valeurs de consigne et/ou les plages de valeurs de consigne pour certaines géométries de l'essieu comme fonction des données, spécifiques au type de véhicule, des suspensions des roues en dépendance du niveau calculé pour chaque roue ou pour chaque essieu.

5. Procédé selon la revendication 1, **caractérisé en ce que** l'on effectue les mesures d'inclinaison individuellement les unes après les autres, par groupes, ou toutes approximativement simultanément.

6. Procédé selon la revendication 1, **caractérisé en ce que** les valeurs de consigne ou les plages de valeurs de consigne, spécifiques au type de véhicule, de la géométrie de l'essieu sont calculées par des techniques cinématiques ou déterminées par voie expérimentale.
